Europäisches Patentamt

European Patent Office

Office européen des brevets

(19)

(11) **EP 1 454 786 A2**

(12) # DEMANDE DE BREVET EUROPEEN

(43) Date de publication:
**08.09.2004 Bulletin 2004/37**

(51) Int Cl.⁷: **B60L 11/12**, B60K 6/04

(21) Numéro de dépôt: **04300099.1**

(22) Date de dépôt: **26.02.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL HR LT LV MK**

(30) Priorité: **27.02.2003 FR 0302419**

(71) Demandeur: **Peugeot Citroen Automobiles SA 78943 Vélizy-Villacoublay Cedex (FR)**

(72) Inventeurs:
• **Prou, Jean-Michel 92250 La Garenne Colombes (FR)**
• **de Wulf, Grégory 75006 Paris (FR)**

(74) Mandataire: **de Beaumont, Michel Cabinet Michel de Beaumont 1, rue Champollion 38000 Grenoble (FR)**

(54) **Commande d'une machine électrique d'un véhicule hybride série**

(57)    L'invention concerne un procédé de commande d'une machine électrique (13) d'un véhicule (10) couplée à un arbre moteur (14) entraîné par un moteur thermique (11) et relié aux roues du véhicule (20), ladite machine électrique étant susceptible de fournir un couple d'assistance pour l'entraînement de l'arbre moteur ou d'être entraînée par l'arbre moteur pour charger une batterie (22), dans lequel la puissance électrique demandée à la machine électrique pour la charge de la batterie est contrôlée selon une commande linéaire quadratique adaptative en fonction de l'état de charge (SOC) de la batterie et d'au moins un gain qui varie en fonction de conditions de fonctionnement du véhicule

Fig 1

EP 1 454 786 A2

**Description**

La présente invention concerne un procédé et un dispositif de commande d'une machine électrique d'un véhicule hybride série.

Un véhicule hybride série comporte un moteur thermique couplé en série avec une machine électrique, le moteur thermique et la machine électrique pouvant fournir chacun un couple participant à l'entraînement des roues du véhicule. La machine électrique assiste le moteur thermique dans ses différentes phases de fonctionnement et permet globalement de diminuer la consommation en carburant du moteur thermique.

Un véhicule hybride série comporte généralement une batterie haute tension, ou batterie de puissance, en plus d'une batterie basse tension classique. La batterie haute tension assiste généralement la batterie basse tension par l'intermédiaire d'un convertisseur de courant continu/continu. Elle peut éventuellement également alimenter directement des équipements du véhicule nécessitant une haute tension.

La batterie haute tension est chargée par la machine électrique qui fonctionne alors comme un alternateur entraîné par le moteur thermique. La machine électrique fonctionnant comme un alternateur peut également assurer directement l'alimentation d'équipements électriques du véhicule.

Une partie du carburant consommé par le moteur thermique est utilisé pour la fourniture du couple d'entraînement de la machine électrique fonctionnant comme un alternateur. L'importance de la consommation supplémentaire dépend de la commande de la puissance électrique fournie par la machine électrique lors de la recharge de la batterie haute tension et également des moments pendant lesquels le fonctionnement de la machine électrique comme alternateur est autorisé.

La présente invention vise une commande de la machine électrique pour la recharge d'une batterie haute tension d'un véhicule hybride série permettant, lors de la recharge, de minimiser la consommation en carburant du moteur thermique et d'assurer une recharge efficace de la batterie.

La présente invention vise également une commande de la machine électrique permettant de fixer de façon optimale les moments pendant lesquels la machine peut fonctionner comme alternateur pour la recharge d'une batterie haute tension de façon à minimiser la consommation globale du moteur thermique et assurer une recharge efficace de la batterie.

La présente invention vise également à l'optimisation des échanges énergétiques d'un véhicule hybride comprenant un moteur thermique, une machine électrique et des batteries haute et basse tension en tenant compte des différents rendements de ces éléments afin de déterminer à quels moments optimaux peut être réalisée une recharge de la batterie haute tension via la machine électrique et à quels moments il est préférable de ne pas effectuer de recharge et d'utiliser alors la batterie haute tension pour fournir de l'énergie électrique, c'est-à-dire utiliser la batterie haute tension comme un "alternateur" dont le rendement est très largement supérieur à un système mécanique. Ceci revient à dire que la présente invention vise l'optimisation des échanges énergétiques d'un véhicule hybride à deux alternateurs, comprenant un alternateur mécanique et un alternateur "chimique".

Pour atteindre ces objets, la présente invention prévoit un procédé de commande d'une machine électrique d'un véhicule couplée à un arbre moteur entraîné par un moteur thermique et relié aux roues du véhicule, ladite machine électrique étant susceptible de fournir un couple d'assistance pour l'entraînement de l'arbre moteur ou d'être entraînée par l'arbre moteur pour charger une batterie, dans lequel la puissance électrique demandée à la machine électrique pour la charge de la batterie est contrôlée selon une commande linéaire quadratique adaptative en fonction de l'état de charge de la batterie et d'au moins un gain qui varie en fonction de conditions de fonctionnement du véhicule.

Selon un mode de réalisation de l'invention, la commande de la puissance électrique demandée à la machine électrique pour la charge de la batterie correspond à la somme discrète de l'état de charge de la batterie multipliée par un premier gain et de l'intégrale discrète de l'écart entre l'état de charge et un état de charge objectif multipliée par un second gain.

Selon un mode de réalisation de l'invention, les premier et second gains varient de façon discrète.

Selon un mode de réalisation de l'invention, les conditions de fonctionnement comprennent le rendement du moteur thermique.

Selon un mode de réalisation de l'invention, les conditions de fonctionnement comprennent le rendement de la machine électrique.

Selon un mode de réalisation de l'invention, les conditions de fonctionnement comprennent la température de la batterie.

Selon un mode de réalisation de l'invention, la puissance électrique demandée à la machine électrique pour la charge de la batterie est nulle lorsque l'état de charge dépasse un état de charge supérieur.

Selon un mode de réalisation de l'invention, lorsque l'état de charge dépasse l'état de charge objectif et tant qu'il ne descend pas en dessous d'un état de charge inférieur, la puissance électrique demandée à la machine électrique pour la charge de la batterie est nulle lorsque le rendement du moteur thermique est inférieur à un rendement minimum déterminé.

La présente invention prévoit également un dispositif de commande d'une machine électrique d'un véhicule comprenant un moteur thermique susceptible de fournir un couple moteur à un arbre moteur relié aux roues du véhicule, la machine électrique étant couplée à l'arbre moteur et étant susceptible de fournir un couple d'assistance pour l'entraînement de l'arbre moteur ou d'être entraînée par l'arbre moteur pour charger une batterie avec une puissance électrique de charge, et comprenant un moyen de mesure de l'état de charge de la batterie, comprenant un moyen de fourniture d'au moins un gain dépendant de conditions de fonctionnement du véhicule ; et un moyen pour déterminer la valeur de la puissance électrique de charge à fournir par la machine électrique selon une commande linéaire quadratique adaptative définie à partir de l'état de charge mesuré par le moyen de mesure et dudit au moins un gain fourni par le moyen de fourniture.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :

la figure 1 représente un exemple d'architecture d'un véhicule hybride série selon l'invention ;
la figure 2 représente les variations de la résistance interne de batteries haute tension de différents types en fonction de la profondeur de décharge de batterie ;
la figure 3 représente un exemple d'évolution de l'état de charge d'une batterie haute tension alimentée par une machine électrique mettant en évidence différentes stratégies de commande de la machine électrique ; et
la figure 4 représente des simulations de variations de l'état de charge d'une batterie haute tension d'un véhicule hybride série alimentée par une machine électrique commandée selon l'invention.

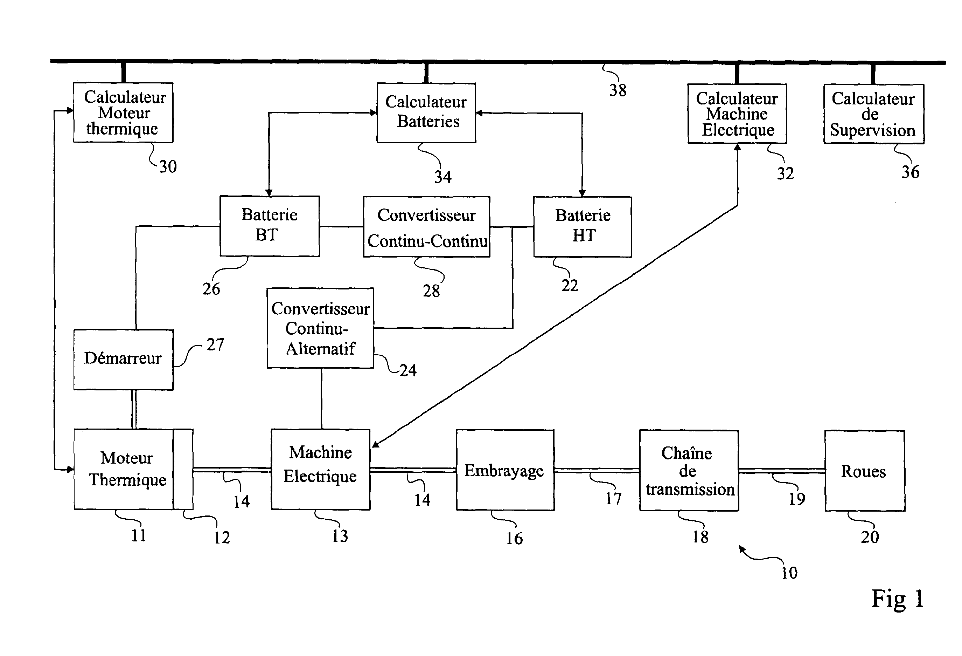

Comme cela est représenté sur la figure 1, le véhicule hybride 10 comprend un moteur thermique 11 associé à un volant moteur 12. Une machine électrique 13 est couplée sur l'arbre moteur 14. L'arbre moteur 14 est relié à un embrayage 16 qui, lorsqu'il est actionné, couple l'arbre moteur 14 à un arbre d'entrée 17 d'une chaîne de transmission 18. La chaîne de transmission 18 comprend, par exemple, une boîte de vitesses et un pont diviseur. La vitesse de rotation de l'arbre de sortie 19 de la chaîne de transmission 18 correspond à la vitesse de rotation de l'arbre d'entrée 17 multipliée par le rapport de réduction global de la chaîne 18. L'arbre de sortie 19 entraîne les roues 20 du véhicule. La boîte de vitesses peut être une boîte de vitesses manuelle classique, une boîte robotisée, une boîte automatique, une boîte continûment variable, etc. L'embrayage 16 peut, selon le type de boîte de vitesses, être automatique ou actionné par le conducteur. Le véhicule hybride 10 peut comporter, sur la ligne d'échappement pour l'évacuation des gaz d'échappement du moteur thermique 11, un catalyseur ou un filtre à particules non représentés.

La machine électrique 13 est reliée à une batterie haute tension 22 par l'intermédiaire d'un convertisseur continu-alternatif 24. La machine électrique 13 peut fonctionner comme un alternateur, entraîné par le moteur thermique 11, et charger la batterie haute tension 22, ou bien fonctionner comme un moteur électrique, alimenté par la batterie haute tension 22, et entraîner l'arbre moteur 14.

La batterie haute tension 22 est reliée à une batterie basse tension 26 par l'intermédiaire d'un convertisseur continu-continu 28. La batterie basse tension 26 alimente un réseau de bord à basse tension du véhicule (non représenté) pour l'alimentation d'équipements classiques du véhicule 10 (par exemple des moyens de climatisation, des moyens d'essuyage, etc.). La batterie basse tension 26 peut alimenter également un démarreur classique 27 pouvant entraîner l'arbre moteur 14. La batterie haute tension 22 peut alimenter à son tour le réseau de bord à basse tension et peut éventuellement alimenter un réseau de bord à haute tension pour l'alimentation d'équipements spécifiques du véhicule qui demandent une puissance élevée, comme par exemple des résistances de chauffage, une direction assistée, le chauffage électrique du catalyseur, etc. A titre d'exemple, la batterie basse tension 26 présente une tension moyenne de 12 volts, et la batterie haute tension 22 est une batterie de puissance de type NimH (Nickel-métal-Hydrure) de tension moyenne de 42 volts.

Le véhicule hybride 10 comporte plusieurs calculateurs 30, 32, 34, 36 qui commandent les différents éléments du véhicule hybride. Les calculateurs 30, 32, 34, 36 peuvent échanger entre eux des données par l'intermédiaire d'un bus d'échange de données 38. Un calculateur 30 de contrôle du moteur thermique est adapté à commander par exemple l'injection dans les chambres de combustion du moteur thermique 11 à partir de paramètres de fonctionnement du moteur thermique 11. Un calculateur 32 de contrôle de la machine électrique 13 est adapté à transmettre à la machine électrique 13 une commande de couple ou une commande de puissance électrique à fournir selon que la machine électrique 13 fonctionne comme un moteur électrique ou un alternateur. Le calculateur 32 peut également émettre, sur le bus de données 38, un signal d'alarme lorsqu'il détecte un dysfonctionnement de la machine électrique 13, du convertisseur continu-alternatif 24 ou du convertisseur continu-continu 28. Un calculateur 34 de contrôle des batteries 22, 26 est adapté, à partir de paramètres de fonctionnement des batteries haute tension 22 et basse tension 26, à, entre autres, émettre, sur le bus de données 38, un signal d'alarme lorsque certaines conditions de bon fonctionnement des batteries 22, 26 ne sont pas remplies. Un calculateur 36 de supervision peut commander les calculateurs 30, 32, 34 dans le but d'assurer des prestations particulières.

Les différents signaux utilisés par les calculateurs 30, 32, 34, 36 sont fournis par des capteurs, non représentés, équipant le véhicule hybride 10. Chaque capteur peut être relié directement à l'un des calculateurs 30, 32, 34, 36, et/ou à un autre calculateur, non représenté, lui-même relié au bus de données 38 ou à l'un des calculateurs 30, 32, 34, 36.

Parmi ces capteurs, on peut notamment distinguer :

- un capteur de la vitesse de rotation (régime) de l'arbre moteur 14 ;
- un capteur de la température de l'eau de refroidissement du moteur thermique 11 ;
- un capteur de la température de la batterie haute tension 22 ;
- un capteur de détection de rapport de vitesse, adapté à fournir un signal indiquant si le point mort de la boîte de vitesses est enclenché ;
- un capteur indiquant si la pédale d'accélérateur du véhicule 10 est actionnée par le conducteur ;
- un capteur de la vitesse instantanée du véhicule 10 ;
- un capteur de la température du catalyseur ;
- des moyens pour indiquer un besoin en énergie électrique spécifique d'équipements du véhicule 10. De tels moyens peuvent consister en un calculateur qui contrôle les équipements du véhicule ;
- des moyens pour déterminer l'état de charge des batteries 22, 26. L'état de charge d'une batterie 22, 26 peut être déterminé par le calculateur batterie 34 à partir de la mesure du courant fourni par la batterie 22, 26.

Lors du fonctionnement normal du véhicule hybride, le moteur thermique 11 fournit à l'arbre moteur 14 un couple d'entraînement des roues 20. La machine électrique 13, fonctionnant comme un moteur électrique alimenté par la batterie haute tension 22, peut fournir un couple d'entraînement additionnel pour assister le moteur thermique 11. Le calculateur de supervision 36 fixe alors les couples à fournir par le moteur thermique 11 et la machine électrique 13 en transmettant des signaux de commande adaptés au calculateur moteur thermique 30 et au calculateur machine électrique 32 par l'intermédiaire du bus de données 38. La machine électrique 13 fonctionnant comme un alternateur peut fournir un couple résistif qui s'oppose au couple d'entraînement dans le but de produire de l'énergie électrique pour charger la batterie haute tension 22 ou alimenter directement des équipements du véhicule. Le calculateur de supervision 36 fixe alors la puissance électrique à fournir par la machine électrique 13, et donc le couple résistif de la machine électrique 13, et le couple à fournir par le moteur thermique 11. Enfin, selon un autre mode de fonctionnement, la machine électrique 13 ne prélève ni ne fournit de couple au moteur thermique 11.

Lorsque la machine électrique 13 fonctionne comme alternateur, le procédé selon l'invention propose de commander la puissance électrique fournie par la machine électrique 13 selon une commande linéaire quadratique. Le principe de la commande est basé sur l'équation de charge de la batterie haute tension 22 dont le modèle est le suivant :

$$SOC = -\alpha(P_{Elec} + P_{BT}) \qquad (1)$$

où SOC correspond à l'état de charge de la batterie haute tension 22, $1/\alpha$ correspond à l'énergie globale de la batterie haute tension 22 exprimée en Joules, $P_{Elec}$ correspond à la puissance électrique, exprimée en watts, échangée entre la machine électrique 13 et la batterie haute tension 22 et sera appelée puissance machine électrique et $P_{BT}$ correspond à la puissance électrique, exprimée en watts, demandée par les équipements électriques du véhicule et sera appelée, par raison de commodité, puissance basse tension même si elle comprend également la puissance demandée par les équipements du réseau de bord haute tension et/ou toutes les autres puissances transitoires (correspondant par exemple à une perturbation du réseau, à une variation due à un effet capacitif, etc.). L'équation (1) permet de considérer la puissance $P_{BT}$ comme une perturbation qu'il faut "rejeter", c'est-à-dire qu'il faut impérativement satisfaire, comme cela sera décrit plus en détail par la suite. Par exemple, si la puissance basse tension $P_{BT}$ est de 2 kW, une telle puissance doit être fournie par la machine électrique, la batterie haute tension ou les deux. La puissance $P_{Elec}$ est positive si la machine électrique 13 fournit un couple d'assistance au moteur thermique 11 et est négative si la machine électrique 13 recharge la batterie haute tension 22. L'état de charge SOC est une variable sans unité qui varie entre 0 et 1. Il est égal à 0 lorsque la batterie haute tension 22 est complètement déchargée et est égal à 1 lorsque la batterie haute tension 22 est complètement chargée. Pour des raisons de sécurité et de disponibilité, il est préférable que l'état de charge SOC ne descende jamais en dessous d'une valeur déterminée. Pour des raisons de rendements de la batterie haute tension 22, l'état de charge SOC ne doit pas non plus dépasser une valeur déterminée, par exemple 0.9.

Une expression approximative de l'énergie globale $\alpha$ de la batterie haute tension 22 est donnée par la relation suivante :

$$\alpha = \frac{1}{3600 \cdot C_{Bat} \cdot U_{Bat}} \tag{2}$$

où $C_{Bat}$ correspond à la charge totale exprimée en ampères par heure de la batterie haute tension 22 et $U_{Bat}$ correspond à la tension exprimée en volts de la batterie haute tension 22.

Selon le procédé de commande de la présente invention, on considère la puissance basse tension $P_{BT}$ dans l'équation (1) comme une perturbation que l'on cherche à rejeter. De plus, l'estimation de cette perturbation permet de supprimer les capteurs sur les réseaux de bord puisque le procédé de commande "reconstruit" la perturbation. Ainsi, la commande de la puissance machine électrique $P_{Elec}$ utilise comme variable l'erreur de l'état de charge $e_{SOC}$ de la batterie haute tension 22 qui est donnée par :

$$e_{SOC} = SOC - SOC_{Obj} \tag{3}$$

où $SOC_{Obj}$ est appelé état de charge objectif et correspond à l'état de charge que l'on souhaite obtenir. L'expression discrète de l'équation (1) devient à l'instant k :

$$SOC_k = SOC_{k-1} + \alpha T_e P_{Elec_{k-1}} + \alpha T_e P_{BT_{k-1}} \tag{4}$$

où $T_e$ correspond à la durée d'échantillonnage du calculateur de supervision 36.

La commande de la puissance machine électrique $P_{Elec}$ tend à faire converger l'erreur de l'état de charge $e_{SOC}$ vers zéro, c'est-à-dire à faire converger l'état de charge SOC de la batterie haute tension 22 vers l'état de charge objectif $SOC_{Obj}$ qui peut être variable. La commande tend donc à faire converger la puissance électrique $P_{Elec}$ fournie par la machine électrique 13 vers l'opposé de la puissance basse tension $P_{BT}$ demandée par les équipements électriques du véhicule.

Pour définir la commande de la puissance électrique $P_{Elec}$, on représente la puissance basse tension $P_{BT}$ par des échelons. Ceci constitue une représentation relativement proche de la réalité puisque la puissance demandée par les équipements électriques du véhicule évolue généralement par paliers au fur et à mesure que les différents équipements électriques du véhicule sont activés ou désactivés. La modélisation par un échelon impose donc un terme intégrable dans le système d'état défini pour l'obtention de la commande de la puissance machine électrique $P_{Elec}$ afin de rejeter la puissance basse tension $P_{BT}$.

En choisissant comme variable d'état discrète le vecteur $x_k$ à deux dimensions, dont la première composante $x_{0_k}$ est égale à l'erreur de l'état de charge $e_{SOC_k}$, et dont la seconde composante $x_{1_k}$ est égale à l'intégrale discrète de l'erreur de l'état de charge $e_{SOC_k}$, le système d'état est alors le suivant :

$$x_k = \begin{bmatrix} 1 & 0 \\ T_e & 1 \end{bmatrix} \cdot x_{k-1} + \begin{bmatrix} \alpha T_e \\ 0 \end{bmatrix} \cdot P_{Elec_{k-1}} = A \cdot x_{k-1} + B \cdot P_{Elec_{k-1}} \tag{5}$$

La commande linéaire quadratique est déterminée de façon à minimiser un critère quadratique J donné par la relation suivante :

$$J = \sum_{k=0}^{N} Q \cdot x_{k-1}^2 + R \cdot P_{Elec_{k-1}}^2 \tag{6}$$

où N est le rang de la matrice A, Q et R sont des matrices de pondération qui déterminent un compromis entre la minimisation de la puissance machine électrique $P_{Elec}$ instantanée, qui est liée à la consommation en carburant du moteur thermique 11, et la rapidité de convergence de l'erreur de l'état de charge $e_{SOC}$ pour disposer plus rapidement de l'énergie fournie par la batterie haute tension 22 utilisée par l'ensemble des organes du véhicule.

La commande linéaire quadratique optimale à l'instant k est donnée par :

$$P_{Elec_{k-1}} = -G \cdot x_{k-1} \qquad (7)$$

où G est une matrice de gain obtenue à partir de l'équation P de Ricatti discrète suivante :

$$P = A^T \cdot P \cdot A - A^T \cdot P \cdot B \cdot (B^T \cdot P \cdot B + R)^{-1} \cdot A^T \cdot P \cdot B + Q \qquad (8)$$

$$G = (B^T \cdot P \cdot B + R)^{-1} \cdot B^T \cdot P \cdot A \qquad (9)$$

Selon le procédé de commande de l'invention, l'état de charge SOC converge naturellement vers l'état de charge objectif $SOC_{Obj}$. En outre, la commande n'entraîne pas d'à coups qui pourraient se produire avec une commande utilisant un capteur de la puissance de la batterie basse tension 26.

Plus précisément, la commande est de la forme suivante :

$$P_{Elec_{k-1}} = -G \cdot x_{k-1} = -\begin{bmatrix} g_1 & g_2 \end{bmatrix} \cdot \begin{bmatrix} x_{0_{k-1}} \\ x_{1_{k-1}} \end{bmatrix} \qquad (10)$$

où $g_1$ et $g_2$ sont les gains de la matrice de gain G .

On définit plusieurs matrices de gain G à partir de différentes matrices de pondérations Q et R selon que l'on souhaite privilégier la rapidité de la convergence de l'état de charge SOC ou la minimisation de la consommation en carburant. Cette commande sera appelée commande quadratique adaptative. Les différentes matrices de gain G possibles sont regroupées dans une matrice globale de gain K dont chaque ligne correspond à un couple de gains $g_1$ et $g_2$ associés à des matrices de pondération Q et R données. Les gains $g_1$ et $g_2$ sont répartis depuis la première ligne de la matrice globale de gain K jusqu'à la dernière ligne de la matrice selon qu'ils assurent une convergence de moins en moins rapide de l'état de charge SOC vers l'état de charge objectif $SOC_{Obj}$ et donc favorise la consommation de carburant.

Un exemple de matrice globale de gain K est le suivant :

$$K = \begin{bmatrix} 10^6 & 10^6 \\ 10^6 & 10^5 \\ 10^6 & 10^{4.8} \\ 10^6 & 10^{4.7} \\ 10^6 & 10^{4.5} \\ 10^6 & 10^4 \\ 10^5 & 10^{3.23} \\ 10^{5.5} & 10^3 \\ 10^{4.5} & 10^2 \\ 10^{5.5} & 10^2 \\ 0 & 0 \end{bmatrix} \qquad (11)$$

Chaque ligne de la matrice globale de gain K correspond à une zone de commande de la machine électrique 13. Dans l'exemple précédent, la première zone est associée à la première ligne de la matrice K et correspond donc à une puissance machine électrique $P_{Elec}$ pour la recharge de la batterie haute tension 22 la plus élevée possible. La onzième zone est associée à la onzième ligne de la matrice K et correspond à des gains $g_1$ et $g_2$ nuls. Ceci signifie qu'en onzième zone, la machine électrique 13 ne fournit pas de puissance électrique de recharge à la batterie haute tension 22. C'est la batterie haute tension 22 qui fournit alors la puissance nécessaire pour satisfaire les besoins électriques du véhicule. C'est le choix de la zone qui va permettre de déterminer la puissance électrique de recharge fournie par la machine électrique 13.

Le choix des zones de commande et le choix du passage d'une zone de commande à une autre sont définis par une stratégie de commande. On peut prévoir plusieurs stratégies de commande, le passage d'une stratégie à une autre dépendant de l'état de charge SOC de la batterie haute tension 22.

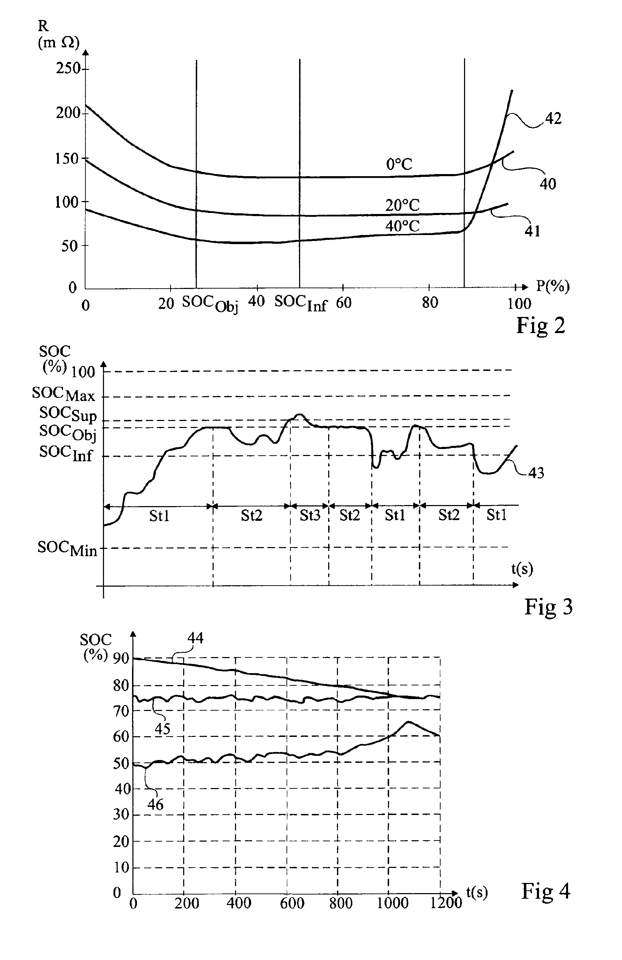

La figure 2 représente trois courbes 40, 41, 42 illustrant chacune la variation de la résistance interne R d'une batterie haute tension en fonction de la profondeur de décharge P pour trois exemples différents de température de batterie haute tension 22, respectivement 0°C, 20°C et 40°C. La profondeur de décharge P est égale à l'unité moins l'état de charge SOC de la batterie haute tension 22. Il apparaît en figure 2 que pour la plupart des technologies de batteries haute tension utilisées actuellement, la résistance R est minimale pour des profondeurs de décharge variant entre 25% et 90%. On peut donc choisir comme état de charge objectif $SOC_{Obj}$ une valeur voisine de 75%. On définit un état de charge supérieur $SOC_{Sup}$ égal à l'état de charge de référence $SOC_{Obj}$ augmenté d'une marge, par exemple de 5%. On définit également un état de charge inférieur $SOC_{Inf}$ égal à l'état de charge objectif $SOC_{Obj}$ diminué d'une marge, par exemple de 10%. Ces différentes valeurs sont basées sur de nombreux essais effectués par la demanderesse.

Selon un exemple de réalisation de la présente invention, on définit des première, deuxième et troisième stratégies ST1, ST2 et ST3 de commande pour le choix des zones z de commande de la matrice globale de gain K.

La figure 3 représente un exemple théorique d'une courbe d'évolution 43 de l'état de charge SOC d'une batterie haute tension 22 de façon à illustrer les critères définissant le passage entre les différentes stratégies. Les références $SOC_{Max}$ et $SOC_{Min}$ représentent les limites d'état de charge imposées par la technologie de la batterie haute tension 22 et qui ne peuvent pas ou ne doivent pas être dépassées.

La première stratégie ST1 est activée lorsque l'état de charge de la batterie haute tension 22 passe en-dessous de l'état de charge inférieur $SOC_{Inf}$ et est désactivée lorsque l'état de charge passe au-dessus de l'état de charge objectif $SOC_{Obj}$.

La seconde stratégie ST2 est activée lorsque l'état de charge passe au-dessus de l'état de charge objectif $SOC_{Obj}$ et est désactivée lorsque l'état de charge passe en-dessous de l'état de charge inférieur $SOC_{Inf}$ ou passe au-dessus de l'état de charge supérieur $SOC_{Sup}$.

La troisième stratégie ST3 est activée lorsque l'état de charge passe au-dessus de l'état de charge supérieur $SOC_{Sup}$ et est désactivée lorsque l'état de charge passe en-dessous de l'état de charge objectif $SOC_{Obj}$.

Pour la première stratégie ST1, le choix des zones z de la matrice globale de gain K est réalisé en tenant compte de plusieurs paramètres. Un premier paramètre $Rend_{MTME}$ est associé aux rendements du moteur thermique 11 et de la machine électrique 13. Un deuxième paramètre Evol_Batt est associé à l'évolution de caractéristiques de fonctionnement d'équipements électriques du véhicule (notamment la température de la batterie haute tension 22 et la température de la machine électrique 13). Un troisième paramètre VV est associé à la volonté du conducteur et à la vitesse du véhicule. Le paramètre VV est défini par exemple à partir de données représentatives de la vitesse du véhicule et de l'accélération de la pédale "d'accélération" (pour évaluer "l'agressivité" du conducteur). Ces paramètres permettent de privilégier la consommation ou la disponibilité des appareils électriques.

Selon la première stratégie ST1, la zone de commande z à prendre en compte à l'instant k pour le choix des gains de la matrice K est donnée par la relation suivante :

$$z_k = \gamma \cdot Rend_{MTME_{k-1}} + \beta \cdot Evol\_Batt_{k-1} + \kappa VV_{k-1} \qquad (12)$$

où les gains $\gamma$, $\beta$ et $\kappa$ sont des coefficients de pondération. Selon la première stratégie ST1, la machine électrique 13 fournit donc à la batterie haute tension 22 une puissance électrique sensiblement en permanence et éventuellement même lorsque le rendement de la machine électrique 13 ou le rendement du moteur thermique 11 est faible.

Selon une variante de la première stratégie ST1, les gains $\gamma$, $\beta$ et $\kappa$ de pondération sont modifiés lorsque la puissance fournie par le moteur thermique 11 est supérieure à une valeur déterminée.

Selon la deuxième stratégie ST2, lorsque le rendement du moteur thermique 11 est suffisamment élevé, la zone de commande z à prendre en compte pour le choix des gains de la matrice K est donnée à l'instant par la relation suivante :

$$z_k = \lambda \cdot Rend_{MTME_{k-1}} + \eta \cdot Evol\_Batt_{k-1} \qquad (13)$$

où $\lambda$ et $\eta$ sont des coefficients de pondération. Lorsque le rendement du moteur thermique 11 n'est pas suffisamment élevé, la zone de commande z à prendre en compte correspond à des gains nuls pour la matrice de gain K. Le domaine de fort rendement peut être défini par la vitesse de rotation de l'arbre moteur 14 qui doit être inférieure à une vitesse de rotation maximale et supérieure à une vitesse de rotation minimale et par le couple fourni par le moteur thermique 11 qui doit être inférieur à un couple maximal.

La deuxième stratégie ST2 autorise donc le chargement de la batterie haute tension 22 seulement lorsque le moteur thermique 11 présente un fort rendement. Ceci permet donc de participer à la réduction de la consommation en carburant du moteur thermique 11 puisque la machine électrique 13 ne prélève pas de couple sur l'arbre moteur 14 pour recharger la batterie haute tension 22 lorsque le rendement du moteur thermique 11 se dégrade. La deuxième stratégie ST2 assure une charge de la batterie haute tension 22 seulement pendant des durées déterminées. Lorsque la batterie haute tension 22 n'est pas alimentée par la machine électrique 22, elle se décharge éventuellement dans la batterie basse tension 26. La deuxième stratégie ST2 doit donc être utilisée seulement dans le cas où l'état de charge SOC de la batterie haute tension 22 est élevé. C'est pourquoi il y a basculement vers la première stratégie ST1 dès que l'état de charge SOC de la batterie haute tension 22 passe en-dessous de l'état de charge inférieur $SOC_{Inf}$.

Selon la troisième stratégie ST3, la zone de commande z à prendre en compte correspond à des gains nuls pour la matrice de gain K. La batterie haute tension 22 n'est donc pas alimentée par la machine électrique 13 et se décharge dans la batterie basse tension 26 pour alimenter des équipements électriques du véhicule. La batterie haute tension 22 peut être considérée comme un alternateur et fournir directement une puissance électrique aux équipements électriques du véhicule. La troisième stratégie ST3 ne peut être mise en oeuvre que lorsque l'état de charge SOC de la batterie haute tension 22 dépasse l'état de charge supérieur $SOC_{Sup}$. Des états de charge aussi élevés peuvent notamment être atteints dans le cas où le véhicule hybride dispose d'une prestation de récupération d'énergie lors du freinage. Une telle prestation peut être mise en oeuvre en plus du procédé de commande de la machine électrique 13 selon l'invention et prévoir que lors du freinage du véhicule, la machine électrique fonctionne comme alternateur et alimente la batterie haute tension 22.

Selon la troisième stratégie ST3, on privilégie l'utilisation directe de l'énergie récupérée sur la chaîne de traction plutôt que le stockage de cette énergie à l'aide de la batterie haute tension 22 même lorsque le rendement du moteur thermique 11 est élevé.

Il est possible de modifier la valeur de l'état de charge objectif $SOC_{Obj}$. Un premier exemple de modification résulte de la structure des batteries haute tension actuellement utilisées. En effet, un écart trop important peut se produire entre les tensions partielles des différents éléments électriques constituant une batterie haute tension. Il est alors souhaitable d'imposer un fort chargement de la batterie haute tension 22 pour recaler les tensions partielles des éléments électriques la constituant. L'état de charge objectif $SOC_{Obj}$ est alors fixé à 80% permettant ainsi une charge forcée importante de la batterie haute tension 22. Un second exemple de modification de l'état de charge objectif $SOC_{Obj}$ apparaît lorsque l'état de charge de la batterie haute tension 22 chute en-dessous d'un seuil déterminé, par exemple 50%, ou lorsque l'état de charge de la batterie haute tension 22 n'est plus mesuré correctement par le calculateur batteries 34. Une charge prioritaire de la batterie haute tension 22 est alors réalisée. Pour ce faire, l'état de charge objectif $SOC_{Obj}$ passe à 140%. La charge est donc imposée au détriment de la minimisation de la consommation en carburant du véhicule hybride. En effet, avec un état de charge objectif $SOC_{Obj}$ aussi élevé, les gains choisis pour la matrice de gain K imposent une forte puissance machine électrique $P_{Elec}$.

Une stratégie supplémentaire peut être envisagée pour prendre en compte un filtre à particules qui sollicite une forte charge de réseau de bord. En effet, le filtre à particules peut requérir des températures de gaz d'échappement élevées pour faciliter la combustion des particules et donc une augmentation du couple moteur. Ainsi, lors d'une demande de régénération du filtre à particules, la valeur de l'état de charge objectif $SOC_{Obj}$ est augmentée afin de charger plus vite la batterie haute tension 22 via la machine électrique 13 et d'augmenter ainsi la puissance nécessaire que doit fournir le moteur thermique 11.

La figure 4 représente des courbes 44, 45, 46 illustrant la variation de l'état de charge SOC d'une batterie haute tension 22 pour des états de charge initiaux respectivement de 90%, 75% et 50%. Les courbes 44, 45, 46 ont été obtenues par simulation et validées sur véhicule avec un gain en consommation supérieur à 5% pour un véhicule hybride série effectuant un parcours normalisé correspondant à un cycle 93-116 selon la norme européenne. On remarque la convergence des trois courbes 44, 45, 46 vers une valeur d'état de charge objectif $SOC_{Obj}$ de 75%.

La première ou la deuxième stratégie ST1, ST2 étant activée, il peut être souhaitable d'interrompre le prélèvement d'un couple sur l'arbre moteur 14 par la machine électrique 13 pour éviter le calage du moteur thermique 11 lorsque la vitesse de rotation de l'arbre moteur 14 est proche d'une vitesse de rotation de ralenti ou régime ralenti.

Un premier exemple peut se produire lorsque la vitesse de rotation de l'arbre moteur 14 passe rapidement au régime ralenti quand le conducteur relâche la pédale d'accélérateur. Le couple fourni par le moteur thermique 11 au régime ralenti peut alors ne pas être suffisant pour compenser le couple prélevé par la machine électrique 13. Le premier cas peut être détecté lorsque la dérivée de la vitesse de rotation de l'arbre moteur 14 est inférieure à un seuil déterminé, lorsque la vitesse de rotation de l'arbre moteur 14 est inférieure à un seuil déterminé et lorsqu'un paramètre associé à la volonté du conducteur est inférieur à un seuil déterminé. De tels seuils peuvent être définis par des hystérésis.

Un second exemple peut se produire lors d'une reprise du moteur thermique 11 pendant laquelle on souhaite généralement appliquer un couple important à l'entraînement des roues. Or, la partie du couple fourni par le moteur thermique 11 prélevée par la machine électrique 13 pour le chargement de la batterie haute tension 22 diminue d'autant le couple disponible pour l'entraînement des roues. Une reprise peut être détectée lorsque le paramètre associé à la volonté du conducteur est supérieur à un seuil déterminé et lorsque la vitesse de rotation de l'arbre moteur 14 est inférieure à un seuil déterminé. Ces seuils peuvent également être définis par des hystérésis.

Il peut également être souhaitable d'interrompre le prélèvement d'un couple sur l'arbre moteur 14 par la machine électrique 13 en fonction de valeurs particulières de la puissance machine électrique $P_{Elec}$.

Un premier exemple se produit lorsque la puissance électrique à fournir par la machine électrique 13 à la batterie haute tension 22 descend en dessous d'un seuil déterminé. En effet, il apparaît, pour la majorité des technologies de machines électriques actuellement utilisées, une chute importante du rendement de la machine électrique 13 à faible puissance. Il est donc préférable de ne pas faire fonctionner la machine électrique 13 dans de telles conditions. Selon les machines électriques, le seuil est fixé à des valeurs de 1200 à 2000 watts. Ce seuil peut être défini par une hystérésis.

Un second exemple se produit lorsque la puissance machine électrique $P_{Elec}$ passe au-dessus d'une puissance machine électrique maximale déterminée. En effet, il apparaît que lorsque l'état de charge SOC est relativement faible, la commande de la machine électrique 13 selon l'invention tendrait à imposer une puissance machine électrique $P_{Elec}$ élevée qui limite le couple pouvant être fourni par le moteur thermique 11 et qui peut éventuellement être à l'origine de l'émission d'un signal d'alarme par le calculateur 34 de contrôle des batteries 22, 26. On peut prévoir d'implémenter une cartographie indiquant une puissance machine électrique maximale qui croît avec la vitesse de rotation de l'arbre moteur 14 afin de permettre une charge plus importante de la batterie haute tension 22 pour une vitesse de rotation de l'arbre moteur 14 élevée.

Il peut également être souhaitable de réguler la puissance machine électrique $P_{Elec}$ pour éviter qu'il ne se produise des variations trop rapides qui risqueraient d'entraîner l'émission d'un signal d'alarme par le calculateur 34 de contrôle des batteries 22, 26. La présente invention peut donc prévoir d'imposer des taux d'augmentation et de diminution maximum de la puissance machine électrique $P_{Elec}$ qui peuvent dépendre de la vitesse de rotation de l'arbre moteur 14.

Il peut également être souhaitable d'effectuer un filtrage de la mesure de la vitesse de rotation de l'arbre moteur 14 utilisée pour produire la commande de couple du moteur thermique 11. Un tel filtrage permet d'éviter une variation trop rapide de la commande de couple du moteur thermique 11 qui pourrait entraîner des phénomènes de pompage ou d'à-coups notamment à des faibles rapports de boîte de vitesses ou au point mort. La présente invention prévoit une constante de temps de filtrage de l'ordre de la seconde.

En outre, on peut prévoir une commande de la machine électrique permettant d'assurer une transition convenable du couple prélevé par la machine électrique fonctionnant comme un alternateur ou du couple fourni par la machine électrique fonctionnant comme un moteur électrique entre les différentes prestations mises en oeuvre sur le véhicule hybride.

Bien entendu, la présente invention est susceptible de diverses variantes et modifications qui apparaîtront à l'homme de l'art. En particulier, les différents calculateurs pourraient être intégrés en un unique calculateur.

## Revendications

1. Procédé de commande d'une machine électrique (13) d'un véhicule (10) couplée à un arbre moteur (14) entraîné par un moteur thermique (11) et relié aux roues du véhicule (20), ladite machine électrique étant susceptible de fournir un couple d'assistance pour l'entraînement de l'arbre moteur ou d'être entraînée par l'arbre moteur pour charger une batterie (22), **caractérisé en ce que** la puissance électrique demandée à la machine électrique pour la charge de la batterie est contrôlée selon une commande linéaire quadratique adaptative en fonction de l'état de charge (SOC) de la batterie et d'au moins un gain qui varie en fonction de conditions de fonctionnement du véhicule.

2. Procédé selon la revendication 1, dans lequel la commande de la puissance électrique demandée à la machine électrique pour la charge de la batterie correspond à la somme discrète de l'état de charge (SOC) de la batterie (22) multipliée par un premier gain et de l'intégrale discrète de l'écart entre l'état de charge et un état de charge objectif ($SOC_{Obj}$) multipliée par un second gain.

3. Procédé selon la revendication 1, dans lequel les premier et second gains varient de façon discrète.

4. Procédé selon la revendication 1, dans lequel les conditions de fonctionnement comprennent le rendement du moteur thermique (11).

5. Procédé selon la revendication 1, dans lequel les conditions de fonctionnement comprennent le rendement de la machine électrique (13).

6. Procédé selon la revendication 1, dans lequel les conditions de fonctionnement comprennent la température de la batterie (22).

7. Procédé selon la revendication 1, dans lequel la puissance électrique demandée à la machine électrique (13) pour la charge de la batterie (22) est nulle lorsque l'état de charge (SOC) dépasse un état de charge supérieur ($SOC_{Sup}$).

8. Procédé selon la revendication 2, dans lequel lorsque l'état de charge (SOC) dépasse l'état de charge objectif ($SOC_{Obj}$) et tant qu'il ne descend pas en dessous d'un état de charge inférieur ($SOC_{Inf}$), la puissance électrique demandée à la machine électrique (13) pour la charge de la batterie (22) est nulle lorsque le rendement du moteur thermique (11) est inférieur à un rendement minimum déterminé.

9. Dispositif de commande d'une machine électrique (13) d'un véhicule (10) comprenant un moteur thermique (11) susceptible de fournir un couple moteur à un arbre moteur (14) relié aux roues (20) du véhicule, la machine électrique étant couplée à l'arbre moteur et étant susceptible de fournir un couple d'assistance pour l'entraînement de l'arbre moteur ou d'être entraînée par l'arbre moteur pour charger une batterie (22) avec une puissance électrique de charge, et comprenant un moyen de mesure de l'état de charge (SOC) de la batterie, **caractérisé en ce qu'**il comprend :

un moyen de fourniture d'au moins un gain dépendant de conditions de fonctionnement du véhicule ; et
un moyen pour déterminer la valeur de la puissance électrique de charge à fournir par la machine électrique selon une commande linéaire quadratique adaptative définie à partir de l'état de charge mesuré par le moyen de mesure et dudit au moins gain fourni par le moyen de fourniture.

Fig 1

Calculateur Moteur thermique — 30

Calculateur Batteries — 34

38

Calculateur Machine Electrique — 32

Calculateur de Supervision — 36

Batterie BT — 26

Convertisseur Continu-Continu — 28

Batterie HT — 22

Démarreur — 27

Convertisseur Continu-Alternatif — 24

Moteur Thermique — 11 / 12

Machine Electrique — 13

Embrayage — 16

Chaîne de transmission — 18

Roues — 20

14

14

17

19

10

EP 1 454 786 A2

Fig 2

Fig 3

Fig 4